# EUROPÄISCHE PATENTANMELDUNG

(11) **EP 1 213 203 A1**
(43) Veröffentlichungstag der Anmeldung: **12.06.2002**
(21) Anmeldenummer: 00811167.6
(22) Anmeldetag: 08.12.2000
(51) Int. Cl.: B62B 9/14, A45B 11/00

(54) **Halterungsvorrichtung für Sonnen-und/oder Regenchirme**

(71) Anmelder: Stroitz, Winifred, 8493 Saland (CH)
(72) Erfinder: Stroitz, Ehrenfried Marcel, 8620 Wetzikon (CH)
(74) Vertreter: Liebetanz, Michael, Dipl.-Phys.

(57) **Zusammenfassung**

Eine Halterungsvorrichtung für einen Sonnen- oder Regenschirm wird an einem Gefährt, wie einem Kinderwagen oder Rollwagen derart angebracht, daß der Schirm sowohl in der Höhe verstellbar als auch in einem seitlichen Winkel verschwenkbar ist. Erreicht wird dies dadurch, daß eine höhenverstellbare Haltestange (2) durch eine Drehscheibe (4) drehbar an einer Stange des Gefährtes angebracht werden kann. Die Schirmstange kann dann an dieser Haltestange (2) durch einen Halteblock (10) befestigt werden.

## Beschreibung

Die vorliegende Erfindung betrifft eine Halterungsvorrichtung für Sonnen- oder Regenschirme an einem Kinderwagen, Fahrrad, Trottinette, Rollstuhl oder ähnlichem.

Halterungsvorichtungen für Schirme sind im Stand der Technik zum Beispiel als Schirm-Klemmvorrichtung für Rücksäcke und Umhängebeutel beschrieben. Weiterhin sind Vorrichtungen bekannt, mit denen ein Schirm mit Hilfe von Gurten am menschlichen Körper getragen oder befestigt werden kann. Vorrichtungen der genannten Art haben den Nachteil, dass ihr Anbringen am Körper oder Rucksack kompliziert ist und daher häufig die Hilfe einer weiteren Person erforderlich macht. Beim Betreten eines Gebäudes, zum Beispiel zum Zwecke des Verrichtens von Einkäufen, kann der Schirm nicht einfach zusammengeklappt werden, sondern die Klemmvorrichtung muss vom Rucksack oder der Tasche entfernt, beziehungsweise die Gurte vom Körper gelöst werden, da zum einen das Wasser des zusammengeklappten nassen Schirms auf die Person tropfen würde und zum anderen die Tasche beziehungsweise der Rucksack zum Verstauen der eingekauften Ware benötigt wird. Ein weiteres Problem stellt die Aufbewahrung von Gurt und Schirm beziehungsweise Klemmvorrichtung und Schirm während der Verrichtung der Besorgung dar. Ein Schirm allein kann unter Umständen in einem Schirmständer versorgt werden, was jedoch für einen Schirm mit dem beschriebenen aufwendigen Zubehör unmöglich ist.

Aufgabe der vorliegenden Erfindung ist es, eine Vorrichtung zur Verfügung zu stellen, die den Gebrauch eines Schirms beim Mitführen eines Gefährt erlaubt und die eine leichte Handhabung sowie ein unkompliziertes Verstauen ermöglicht.

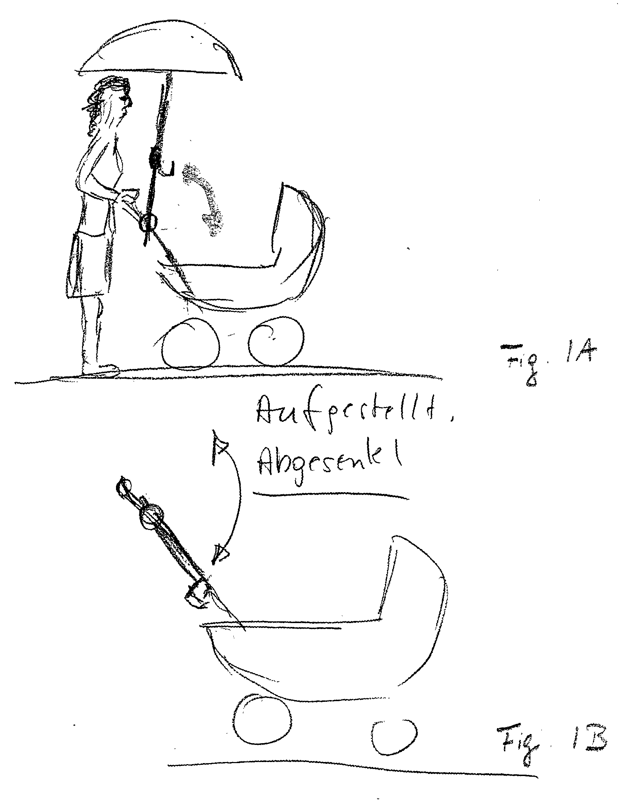

Gelöst werden die genannte Aufgabe, indem der Regen- oder Sonnenschirm an einer Seitenstange eines Kinderwagens, Fahrrads, Trottinettes, Rollstuhls oder ähnlichem mit Hilfe einer speziell für diese entwickelten Haltevorrichtung angebracht wird. Die vorliegende Erfindung ermöglicht ihrem Benutzer beide Hände frei gebrauchen zu können und trotzdem vor Regen oder Sonne geschützt zu sein. Das lästige An- und Ablegen von Gurten oder Klemmvorrichtung ist nicht notwendig, beim Einkauf verbleibt der nasse Schirm am jeweiligen Gefährt und muss nicht getragen oder anderweitig versorgt werden. Der Schirm wird derart am Gefährt befestigt, dass er sowohl in der Höhe als auch in einem seitlichen Winkel verstellt werden kann, und somit jede Person unabhängig von ihrer Grösse und unabhängig vom Einfallswinkel von Sonne und Regen schützt. Wird der Schirm nicht gebraucht, so wird er zusammengeklappt und platzsparend parallel zum Gefährt eingeschwenkt (siehe Figur 1B). Der Schirm kann bei Bedarf leicht aus seiner Befestigung entfernt und wieder eingeführt werden. Darüberhinaus ermöglicht die vorliegende Erfindung die Verwendung beliebiger Schirmarten, wie beispielsweise Damen- oder Herrenschirme, Stockschirme oder sogenannte "Knirps"-Schirme".

Die Erfindung wird durch die folgenden Figuren illustriert:
- Figur 1A: zeigt den Schirm beziehungsweise die Halterungsvorrichtungvorrichtung in Gebrauch.
- Figur 1B: zeigt den Schirm und die Halterungsvorrichtung im unbenutzten, d.h. im zusammengeklappten Zustand.

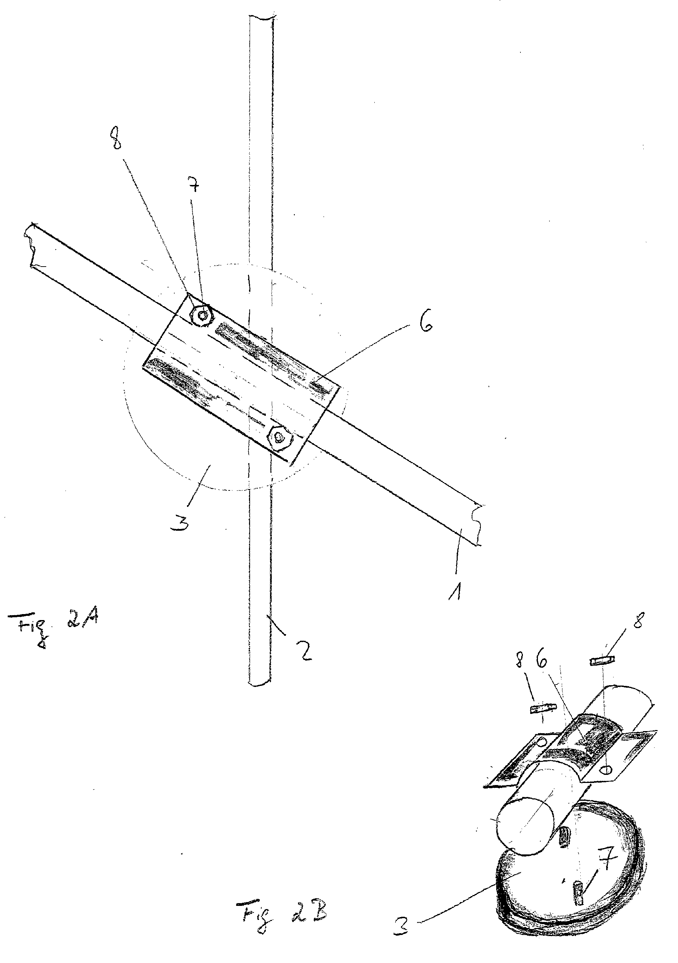

- Figur 2: zeigt eine Aufsicht auf die Haltevorrichtung mit darin befestigtem Schirm.

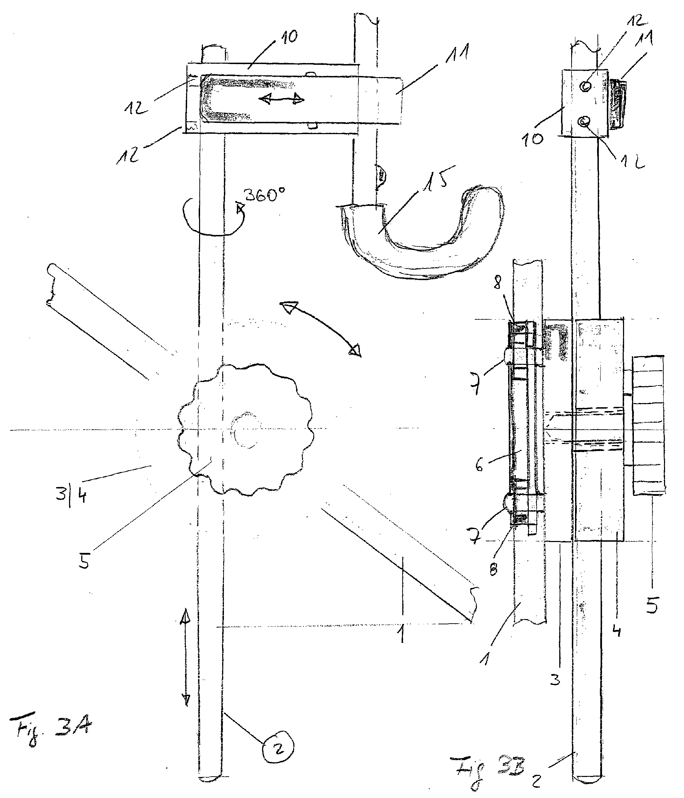

- Figur 3: zeigt die Befestigung der Haltevorrichtung am Gefährt.

Die erfindungsgemässe Vorrichtung besteht im wesentlichen aus einer in der Höhe verstellbaren sowie im Winkel zu einer Seitenführungsstange 1 des Gefährts, hier einem Kinderwagen, schwenkbaren Haltestange 2. An einer Seitenführungsstange 1 wird mittels einer Haltelasche 6 eine Grundplatte 3 für ein Drehsystem befestigt. Die Haltelasche 6 ist mit Muttern 8 an Gewindebolzen 7 befestigt, welche auf der Grundplatte 3 aufgeschweisst sind. Das Drehsystem umfasst neben der Grundplatte 3 eine Drehsscheibe 4, an der sich auch das Haltesystem für die Haltestange 2 befindet. Die Haltestange 2 befindet sich zwischen der Grundplatte 3 und der Drehscheibe 4. Durch Betätigen eines Handrads oder Klemmhebels 5 lässt sich die Drehscheibe 4 anziehen oder lösen, beziehungsweise lässt sich die Haltestange 2 befestigen oder aus dem System entfernen.
Die Halterung für den Schirm besteht aus einem Halteblock 10, der mittels zwei Imbusschrauben 12 auf der Haltestange 2 aufmontiert ist und über einen Spannverschluss 11 verfügt, in welchen der Schirm mit seiner Stange eingespannt wird.

## Patentansprüche

1. Halterungsvorrichtung für Sonnen-oder Regenschirme an einem Gefährt, **dadurch gekennzeichnet, dass** der Schirm derart an genanntem Gefährt befestigt ist, dass er sowohl in der Höhe verstellbar als auch in einem seitlichen Winkel verschwenkbar ist.

2. Halterungsvorrichtung nach Anspruch 1, **dadurch gekennzeichnet, dass** der Schirm bei Nichtgebrauch platzsparend parallel zum Gefährt eingeschwenkt wird.

3. Halterungsvorrichtung nach Anspruch 1 oder 2, **dadurch gekennzeichnet, dass** das Gefährt ein Trottinette, Fahrrad, Rollstuhl oder Kinderwagen ist.

4. Halterungsvorrichtung nach einem der voherigen Ansprüche, **dadurch gekennzeichnet, dass** sie eine Haltestange (2), eine Grundplatte (3) eine Drehscheibe (4), ein Handrad oder Klemmhebel (5) sowie einen Halteblock (10) umfasst.

5. Halterungsvorrichtung nach einem der voherigen Ansprüche, **dadurch gekennzeichnet, dass** die Haltestange (2) an einer Führungsstange (1) eines Gefährts mittels der Grundplatte (3) befestigt ist, die ihrerseits an der Führungsstange mittels der Haltelasche (6) befestigt ist, wobei auf der Grundplatte (3) die Drehscheibe (4) aufgebracht ist, die sich mittels des Klemmrads oder Handrads (5) anziehen und lösen lässt.

6. Halterungsvorrichtung nach einem der voherigen Ansprüche, **dadurch gekennzeichnet, dass** sich die Haltestange (2) zwischen der Grundplatte (3) und der Drehplatte(4) befindet.

7. Halterungsvorrichtung nach einem der voherigen Ansprüche, **dadurch gekennzeichnet, dass** die Haltestange (2) in der Höhe verstellbar und seitlich schwenkbar ist.

8. Halterungsvorrichtung nach einem der voherigen Ansprüche, **dadurch gekennzeichnet, dass** die Haltestange (2) einen Halteblock (10) umfasst, in welchen eine Schirmstange eingespannt wird.
